# EUROPEAN PATENT APPLICATION

(11) **EP 2 397 037 A1**
(43) Date of publication of application: **21.12.2011**
(21) Application number: 11169975.7
(22) Date of filing: 15.06.2011
(51) Int. Cl.: A23J 1/04, A23J 1/12, A23J 1/14, A23J 1/20

(54) **Method for separating protein from food**

(30) Priority: 15.06.2010 KR 20100056751
(71) Applicant: CJ CheilJedang Corporation, Seoul, 100-400 (KR)
(72) Inventor: Cho, Seong Jun, 120-092 Seoul (KR); Seo, Sang Hyun, Seoul 121-210 (KR); Han, Sung Wook, Incheon 406-777 (KR); Ryu, Je Hoon, Seoul 152-090 (KR); Park, Seung Won, Gyeonggi-do, 446-742 (KR)
(74) Representative: Golding, Louise Ann

(57) **Abstract**

The present invention relates to a method for separating protein from food by using an iso-electric point precipitation, comprising: obtaining a protein extract by adjusting pH of a raw material food in a media; precipitating the protein by adjusting pH of the protein extract to an iso-electric point of the desired protein; and recovering the protein precipitated after separating a protein filtrate through centrifuging the precipitated protein; in which the method may further include a heat-precipitation of the protein by heating the protein extract or the protein filtrate to 60~145 °C. The protein obtained in high yield according to the above method can be used as a food additive or a food nutritional enhancer.

## Description

### BACKGROUND OF THE INVENTION

### Field of the Invention

The present invention relates to a method for separating protein from food, and more specifically, to a method for separating protein from food in order to increase a recovery rate of protein when separating protein from food.

### Description of Related Art

Worldwide protein material markets are expected over about 20 billion. The protein materials are now used in a food industry, and the like for various purposes, and the protein material that is usually used includes milk protein (casein protein, whey protein), single cell protein, soybean protein, fish protein, gluten, pea protein, rice protein (rice bran protein, brown rice protein, rice protein), and the like, and is widely used for applications.

The protein is used as various food additives, such as a nutritional enhancer, a bulking agent, a thickening agent, and emulsifier, and is actually used in various products, such as baked delicacies, breads, meat processed foods, noodles, desserts, functional foods, and the like.

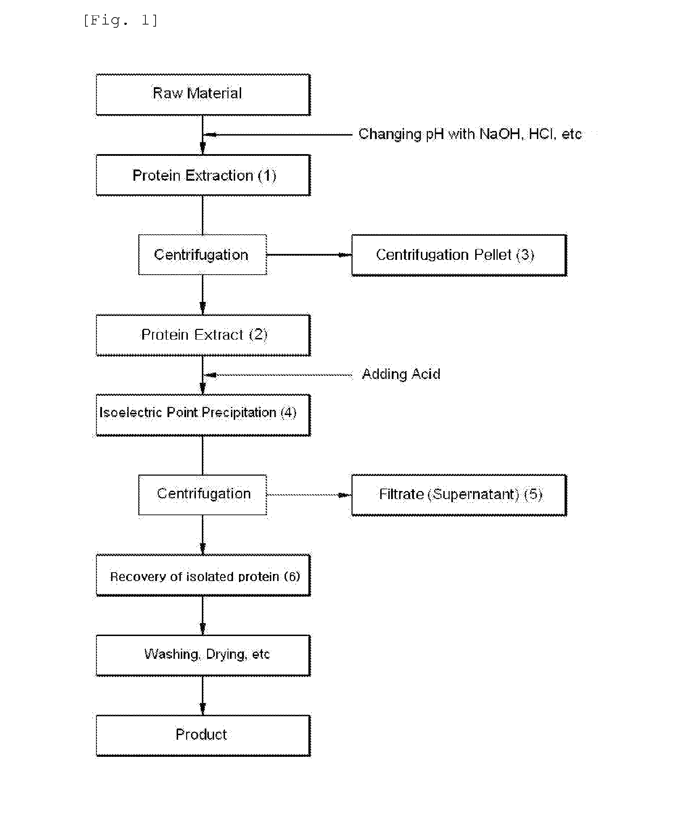

A method for separating the proteins as mentioned above from food is a membrane filtration method that is usually used for separating whey protein and a separating method using iso-electric point precipitation that is used for separating the proteins in other most foods. The method for separating the protein by using the iso-electric point precipitation among those methods is widely used because it is simple and can be used for separating several types of proteins, and it can be achieved by the process as shown in Fig. 1.

The method for separating the protein according to the iso-electric point precipitation as shown in Fig. 1 comprises (1) extracting the protein from a raw food by adjusting pH in a medium; (2) obtaining a protein extract; (4) precipitating the protein by adjusting pH of the protein extract to the iso-electric point of the desired protein; (5) separating the protein filtrate by centrifuging the precipitated protein; and (6) recovering the precipitated protein.

As an example of a method for separating protein by using the iso-electric point as mentioned above, a method for separating an isolated soy protein (SPC: soy protein concentrate or ISP: isolated soy protein) from soy is as follows: Water is added to soy, its pH is adjusted to 6.8~11 to extract a soy protein (1: Protein Extraction); an acid, such as hydrochloric acid or sulfuric acid is added to a supernatant (2: Protein extract) obtained by centrifuging the soy protein obtained from the above step to adjust its pH to the iso-electric point (pH 4.5 in the case of a soy protein) and then precipitate the soy protein (4: Iso-electric Point Precipitation); and then the filtrate (5) is removed out through the centrifugation, and the like and recover the isolated protein precipitate (6: recovering of isolated Protein); the recovered material is washed and dried to finish the isolated protein product (US 2008/0096243 A1). Now, small companies as well as a large company, such as Fuji-Oil Group, Solae, and the like are having a sale by separating the isolated soy protein through the general iso-electric point precipitating process.

When extracting the protein using a protein separating method according to the iso-electric point precipitation as mentioned above(1: protein extraction), pH of the protein extract is highly diversified to pH 2~11 depending on the properties of the raw material and the desired final product. An iso-electric point precipitating process after high pH extracting is being used in various fields, such as an isolation of a casein protein from milk, an isolation of a soy protein(ISP: Isolate Soy Protein, SPC: Soy Protein Concentration), an isolation of a pea protein, an isolation of a rice (rice bran) protein, an isolation of a fish protein, and the like; and an iso-electric point precipitating process after low pH extracting is being used in the fields, such as an isolation of a fish protein (FPI: Fish Protein Concentration), an isolation of a soy protein for a specific use (for a beverage), and the like. As mentioned above, a detailed method for separating protein through the iso-electric point precipitation that is performed according to all sorts of raw materials and final products is well known in the art.

Since the method for separating protein by using the iso-electric point precipitation is widely accepted from the past, the relevant additional studies were proceeded. There are many studies for increasing the use of the produced protein, such as a study for increasing a solubility of the isolated protein product (Korean Patent Publication No. 2003-0087184); a study for increasing a functionality of the isolated soy protein product (Korean Patent Publication No. 2004-0097222); a method for preparing the protein available for acid foods (US 7,465,470); and the like. In addition, the study relating the method for preparing the protein while decreasing off-flavor in the case of soy was proceeded, but there are not many studies about increasing a protein yield in the method for separating protein using the iso-electric point.

The process for separating protein by using the iso-electric point has a problem such as a low yield, and also a cost for treating waste water may be high due to the high protein content in the waste water generated after separating the protein because of the low yield. Therefore, there is a need for a method or technique to improve low yield in the process for separating protein by using the iso-electric point. It is the reason why the research about improving low yield that is a fundamental problem of the process for separating protein by using the iso-electric point are not sufficiently proceeded that many companies are already producing the products through the method (a separating method by using the basic iso-electric point precipitation) set in their factories and also there are many risks that generated by changing the many processes and by changing from the total processes to the totally new processes.

### SUMMARY OF THE INVENTION

The inventors finished the present invention from the result for researching the method that is simple, inexpensive, and also can improve the yield of the protein isolated from the separating method by using the iso-electric point precipitation that is used for separating the protein for most foods, in which the method can improve the yield by adding only some processes without largely changing the existed method.

Therefore, an object of the present invention is to provide a method for separating protein, in which the method has high yield of the protein by modifying a method for separating protein by using the conventional iso-electric point precipitation.

Another object of the present invention is to provide a protein isolated through the method for separating protein according to the present invention.

Another object of the present invention is to provide a food additive containing the protein isolated through the method for separating protein according to the present invention.

In order to achieve the above objects, the present invention provides a method for separating protein from food by using an iso-electric point precipitation, comprising:

Obtaining a protein extract by adjusting pH of a raw material food in a media;

precipitating the protein by adjusting pH of the protein extract to an iso-electric point of the desired protein; and

recovering the precipitated protein after separating a protein filtrate by centrifuging the precipitated protein;

in which the method may further include a heat-precipitation of the protein by heating the protein extract or the protein filtrate to 60~145 C.

In addition, the present invention provides the protein isolated according to the method of the present invention.

In addition, the present invention provides a food additive containing the protein isolated according to the method of the present invention.

Hereinafter, the present invention will be described in more detail.

The inventors researched about the method for improving the yield of the protein, in which the method is simpler and economically effective in the method for separating protein from food according to the conventional iso-electric point precipitation. As a result, the present invention was created based on the detection of improving the yield of the protein isolated from food without heavy charges and much effort in the case of further adding a heating of the protein extract or the protein filtrate that will be discharged at the temperature that can precipitate the protein to be isolated in the method for separating protein from food according to the iso-electric point precipitation.

Therefore, one aspect of the present invention provides a method for separating protein from food by using an iso-electric point precipitation, comprising:

obtaining a protein extract by adjusting pH of a raw material food in a media;

precipitating the protein by adjusting pH of the protein extract to an iso-electric point of the desired protein; and

recovering the precipitated protein after separating a protein filtrate by centrifuging the precipitated protein;

in which the method may further include a heat-precipitation of the protein by heating the protein extract or the protein filtrate to 60~145 °C.

The method for separating protein according to the present invention can be used for all kinds of foods that can use the conventional method for separating protein according to the existed iso-electric point precipitation, and for example can be used for separating protein from milk, soy, rice bran, fish, and the like.

The method for separating protein from food according to the iso-electric point precipitation is well known widely in the field as mentioned above (US 2008/0096243 A1, Liu, KeShun (1997-05-01) (Hardcover). Soybeans: Chemistry, Technology, and Utilization. Springer. p.532. ISBN 0-8342-1299-4. "Citation on p.391 from Watanabe, et al., 1971), and the method can be applied for the present invention like that.

The present invention is characterized as additionally precipitating the protein that will be precipitated by heat in the protein that is in a water-soluble state not precipitated at the iso-electric point in the method for separating protein from food by using the known iso-electric point precipitation. Since the protein that is not precipitated at the iso-electric point is continually present in a water-soluble state during the whole process, the protein that will be precipitated by heat can be further precipitated by heating the protein extract (2) obtained from the step for obtaining the protein extract (1) or the protein filtrate (5) obtained from the step for precipitating protein at an iso-electric point (4). The temperature for heating may be 60 to 145 °C and an appropriate temperature that can allow to further precipitating the protein can be selected according to the type of raw material foods and the type of protein to be separated.

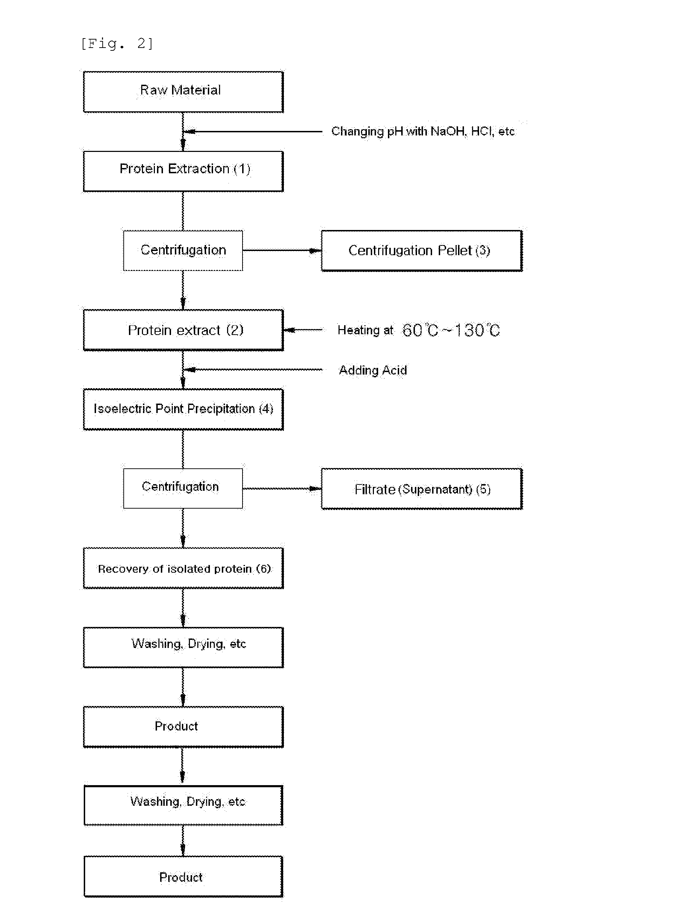

One embodiment of the method for heating the protein extract (2) among the methods for heating the protein extract (2) or the protein filtrate (5) is shown as a flowchart in Fig. 2. When heating the protein extract (2), the step for precipitating by using the protein iso-electric point (4) may be performed with the protein filtrate (5) after recovering the precipitated protein. However, as shown in Fig. 2, the heated protein extract may be intactly subjected to the steps for precipitating by using the protein iso-electric point (4) and the steps for recovering the isolated protein (6).

According to Fig. 2, the step for heating at 60 to 145 °C is performed with the protein extract (2) obtained by removing a pellet after centrifuging prior to the step for precipitating by using an iso-electric point (4) after the step for obtaining the protein extract by adjusting the pH (1). The precipitation of the protein may be achieved by the above process which the protein is precipitated by heating at the fixed temperature. And then, an acid is added to the protein extract (2) containing the protein precipitated by heating to perform the step for precipitating by using the iso-electric point (4). And then, the step for recovering the isolated protein (6) is performed as follows: the protein filtrate is removed out by centrifuging the protein precipitated by heating and precipitating using the iso-electric point and then the isolated protein is recovered. And then, the obtained isolated protein is subjected to the finish process, such as washing, drying, and the like to finish the isolated protein product.

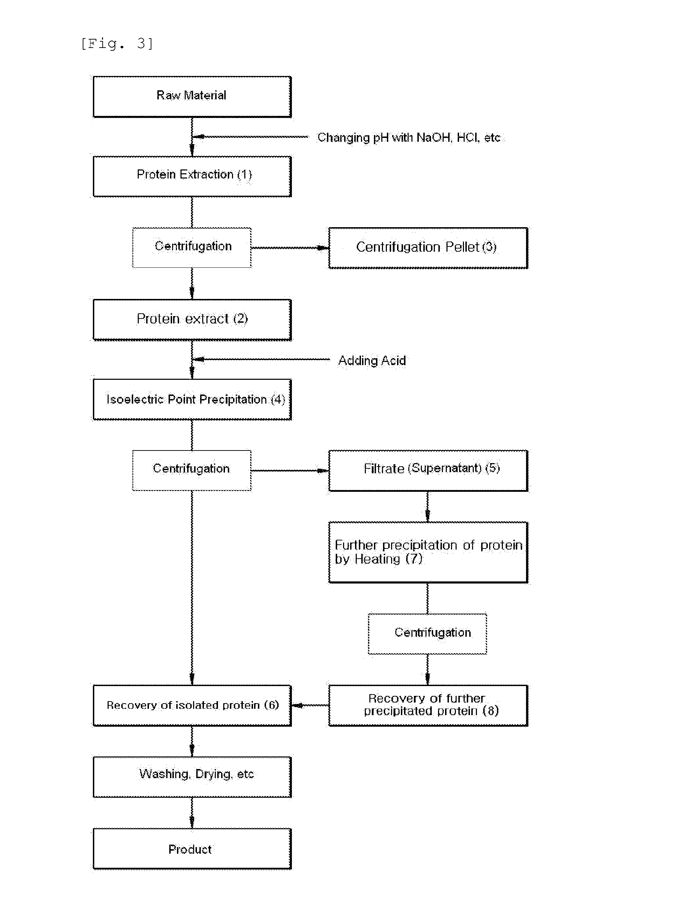

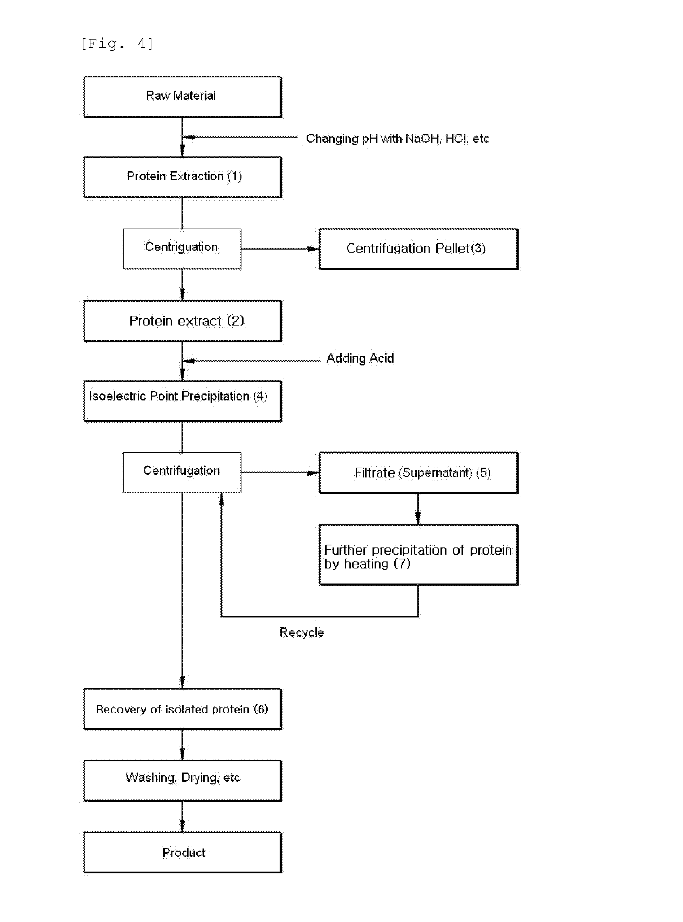

One embodiment of the method for heating the protein filtrate (5) instead of the protein extract (2) is shown as a flowchart in Fig. 3 and Fig. 4. When heating the protein filtrate (5), the protein precipitated by heating (7) is further centrifuged so that the further precipitated protein (8) may be recovered. Fig. 3 is a flowchart showing the process that is characterized as adding the recovered further precipitated protein (8) to the protein recovered after precipitating by using the protein iso-electric point (6). Fig. 4 is a flowchart that is characterized as not performing further step for centrifuging by adding the protein filtrate further precipitated by heating (7) to the centrifugation unit for the step for recovering the protein (6).

According to Fig. 3, after the step for obtaining the protein extract by adjusting pH (1), the centrifugation is performed; the centrifugation pellet is removed; the step for precipitating by using the iso-electric point (4) is performed by adding an acid to the protein extract (2) obtained therefrom; the protein precipitated by centrifuging is recovered (6); and then the protein filtrate (5) that will be removed is heated. The protein precipitated by heating at the fixed temperature may be precipitated by the above process. After the protein further precipitated by heating (7) is recovered by centrifuging (8), the protein recovered by using the iso-electric point precipitation (6) is added thereto. Thus, the obtained isolated protein is subjected to the finish process, such as washing, drying, and the like to finish the isolated protein product.

According to the flowchart of Fig. 4, a separate centrifugation process is omitted by recycling the protein precipitated by heating (7) to the centrifugation unit after the step for precipitating by using the iso-electric point (4) without the separate centrifugation process. According to the above method, the method for separating protein can be economically performed in high yield because the further protein separating process can be performed without the separate centrifugation process.

In the step for heating and precipitating protein, heating may be performed in heat exchanger or using a direct steam method.

In the conventional method for separating protein from food by using the iso-electric point precipitation, the method for separating protein according to the present invention can improve the yield for separating the protein by introducing the simple process that is the step for further precipitating protein precipitated by heat in the protein that is in a water-soluble state but not precipitated at the iso-electric point by heating the protein filtrate or the protein extract. The method of the present invention is preferable because an overall separating yield can be improved by only further introducing the process for precipitating protein by heating while the apparatus for separating protein from food by using the iso-electric point that is conventionally and widely used can be used as it is. In addition, if the part of the protein filtrate (5) goes out to waste water in the process for separating protein by using the iso-electric point precipitation, a cost for treating the waste water is high due to high content of the protein in the part of the protein filtrate (5). Therefore, according to the present invention, a cost for treating the waste water can be also reduced because the content of the protein in the waste water to waste is low.

In addition, the additional process cost is very low because the heat used for heating for the additional precipitation can be recycled through the heat exchanger. The reason is that there are frequent occasions when a heat of medium temperature is generally used to perform the precipitation in the process for extracting protein, but the heat used for heating for the additional precipitation according to the present invention can be recycled in the previous processes through the heat exchanger, and the like.

The protein isolated according to the present invention may be the protein having new components containing further the protein precipitated by heating in addition to the protein obtained from the method for separating protein from food by using the iso-electric point.

Therefore, other aspect of the present invention provides the protein isolated according to the method for separating protein of the present invention.

The protein of high yield obtained according to the method for separating as mentioned above can be applied to an additive field for enhancing the food nutrition, and improving the physical property of food or improving the quality of food.

Therefore, the present invention provides a food additive containing the protein obtained from the method for separating according to the present invention.

The food additive means the material that is added for improving the nutrition and flavor of processed foods or extending a shelf life of processed foods. Examples of the food additive include a nutritional enhancer, a bulking agent, a thickening agent, or emulsifier, but are not limited thereto. The protein obtained according to the method for separating of the present invention can be used to processed food that is selected from the group consisting of dressing, mayonnaise, pudding, bean curd, baby food, cracker and bread as the food additive.

As disclosed in the above, the method for separating protein from food according to the present invention can improve the yield of protein separated by further adding the protein precipitation process by heating to the method for separating protein by using the iso-electric point that is conventionally and widely used for separating protein for foods. In addition, the method is preferable because the yield can be simply increased by only adding the some additional process without largely changing the apparatus for separating protein for foods by using the iso-electric point precipitation without heavy charges. Additionally, the method has an advantage such that the content of protein in the waste water to waste after separating protein is low according to the present invention thereby decreasing the cost for treating the waste water.

### BRIEF DESCRIPTION OF THE DRAWINGS

Fig. 1 is a flowchart showing a conventional method for separating protein by using an iso-electric point precipitation.

Fig. 2 is a flowchart showing one embodiment of the method for heating a protein extract during the method for separating protein according to the present invention.

Fig. 3 is a flowchart showing one embodiment of the method for heating a protein filtrate during the method for separating protein according to the present invention.

Fig. 4 is a flowchart showing other embodiment of the method for heating a protein filtrate during the method for separating protein according to the present invention.

### DESCRIPTION OF SPECIFIC EMBODIMENTS

Hereinafter, the present invention will be described in more detail with reference to the following Examples. However, the following Examples are only for understanding the present invention, but the range of the present invention is not limited thereto in a certain sense.

Example 1: Separation of Protein from Rice Bran by using Iso-electric Point Precipitation and Heating Process

The separation of protein by using an iso-electric point precipitation was performed with 5,000 g of defatted rice bran (crude protein content: 990 g) as a raw material. The protein was extracted by adding 5 times water to 5,000 g of defatted rice bran while maintaining at pH 9 and stirring for 1 hour under the condition of 30 °C. Thus, supernatant and pellet were separated by centrifuging the obtained protein extract for 10 minutes at 8,000 rpm. The supernatant was taken for use and then the protein in the supernatant was precipitated while maintaining at pH 4 and stirring for 30 minutes (the acid precipitation process). Again, it was centrifuged at 8,000 rpm for 10 minutes. The centrifugation pellet (White protein coagulation) produced from the above process was taken (Protein coagulation A) and the remainder centrifugation supernatant (Protein filtrate) was heated at 60 to 145 °C. It was heated for 30 minutes while stirring to obtain again a white coagulation (protein) and then was again centrifuged (8,000 rpm for 10 minutes) to separate and take the protein part (pellet) (Protein coagulation B). The protein coagulation A and B were mixed; 10 times water was added to the mixture; and then centrifuged (Process for washing). The pellet part (Protein coagulation) was taken; dried at less than 5 % of water through a freeze-drying; and then the protein content in the dried final product was measured. The protein content was generally measured by using Kjeldahl method that is a method for determining crude protein content.

As a result of measuring protein content, it could be known that 499.2 g of protein could be obtained from 5 kg of rice bran.

Comparative Example 1: Separation of Protein from Rice Bran by using Iso-electric Point Precipitation

A protein was separated from rice bran by using the same method with the method of Example 1, except omitting the step for obtaining the protein coagulation B by heating the protein filtrate in the method of Example 1. The protein content in the final product obtained from the above process was measured by using Kjeldahl method. As a result, it could be known that 466 g of protein could be obtained from 5 kg of the rice bran.

From the above result, it could be known that the yield of Example 1 according to the present invention is high up to 9 % as compared with the yield of Comparative Example 1 according to the conventional method.

Example 2: Separation of Protein from Soybean by using Iso-electric Point Precipitation and Heating Process

The protein separation by using an iso-electric point precipitation was performed with 5,000 g of defatted soybean (clude protein content: 990 g) as a raw material. The protein was extracted by adding 10 times water to 5,000 g of defatted soybean while maintaining at pH 9 and stirring for 1 hour under the condition of 30 °C. Thus, supernatant and pellet were separated by centrifuging the protein extract obtained for 10 minutes at 8,000 rpm. The supernatant was taken for use and then the protein in the supernatant was precipitated while maintaining at pH 4 and stirring for 30 minutes (the acid precipitation process). The protein solution that was changed to a white color at the condition of pH 4 was again centrifuged at 8,000 rpm for 10 minutes. The centrifugation pellet (White protein coagulation) produced from the above process was taken (Protein coagulation A) and the remainder centrifugation supernatant was heated between 60~145 °C. It was heated for 30 minutes while stirring to obtain again a white coagulation (protein) and then was again centrifuged (8,000 rpm for 10 minutes) to separate and take the protein part (pellet) (Protein coagulation B). The protein coagulation A and B were mixed; 10 times water was added to the mixture; and then centrifuged (Process for washing). The pellet (Protein coagulation) was taken; dried at less than 5 % of water through a freeze-drying; and then the protein content in the dried final product was measured. The protein content was generally measured by using Kjeldahl method that is a method for determining crude protein content.

As a result of measuring protein content, it could be known that 1.72 kg of protein could be obtained from 5 kg of soybean.

Comparative Example 2: Separation of Protein from Soybean by using Iso-electric Point Precipitation

A protein was separated from rice bran by using the same method with the method of Example 2, except omitting the step for obtaining the protein coagulation B by heating the protein filtrate in the method of Example 2. The protein content in the final product obtained from the above process was measured by using Kjeldahl method. As a result, it could be known that 1.6 kg of protein could be obtained from 5 kg of the soybean.

From the above result, it could be known that the yield of Example 2 according to the present invention is high up to 7.5 % as compared with the yield of Comparative Example 2 according to the conventional method.

## Claims

1. A method for separating protein from food using an iso-electric point precipitation, said method comprising:
obtaining a protein extract by adjusting the pH of a raw material food in a medium;
precipitating the protein by adjusting the pH of the protein extract to the iso-electric point of the desired protein; and
recovering the precipitated protein after separating a protein filtrate by centrifugation;
wherein the method further comprises heat-precipitation of the protein by heating the protein extract or the protein filtrate to 60-145°C.

2. The method of claim 1, wherein the food is milk, soy, rice bran or fish.

3. The method of claim 1 or claim 2, which comprises:
heating the protein extract;
subjecting the heated protein extract to the iso-electric point precipitation; and
recovering the precipitated protein.

4. The method of claim 1 or claim 2, which comprises:
heating the protein filtrate whereby to produce an additional precipitated protein; and
recovering said additional precipitated protein by further centrifugation.

5. The method of claim 4, which further comprises the step of adding the additional precipitated protein to the protein recovered after the iso-electric point precipitation.

6. The method of claim 1 or claim 2, which comprises:
heating the protein filtrate whereby to produce an additional precipitated protein; and
recycling said additional precipitated protein to a centrifugation unit used in the recovery of the protein following the iso-electric point precipitation.

7. The method of any one of claims 1 to 6, wherein the step of heat-precipitation is performed in a heat exchanger or a direct steam process.

8. The method of any one of claims 1 to 7, wherein the pH of the protein extract is adjusted to between 2 and 11.

9. The method of any one of claims 1 to 8, which further comprises subjecting the recovered protein to a finishing step comprising washing and/or drying of the protein.

10. The method of claim 9, wherein the finishing step comprises freeze-drying of the protein.

11. A protein obtainable by the method according to any one of claims 1 to 10.

12. A food or food additive comprising the protein of claim 11.

13. The food additive of claim 12, wherein the food additive is a nutritional enhancer, a bulking agent, a thickening agent, or an emulsifier.

14. The food of claim 12, wherein the food is selected from the group consisting of noodles, desserts, crackers, breads and functional foods.

15. Use of a food additive according to claim 12 as a nutritional enhancer, a bulking agent, a thickening agent, or an emulsifier.
